# EUROPÄISCHE PATENTSCHRIFT

(11) **EP 2 947 415 B1**
(45) Veröffentlichungstag und Bekanntmachung des Hinweises auf die Patenterteilung: **19.06.2019**
(21) Anmeldenummer: 15156786.4
(22) Anmeldetag: 26.02.2015
(51) Int. Cl.: G01B 7/14

(54) **Einrichtung zur Bestimmung des Abstandes zweier Bauteile zueinander, umfassend einen Wirbelstromaufnehmer mit einem durch eine Kabelverbindung daran angeschlossenen Messumformer**
Device for determining the distance between two components in relation to each other, comprising an eddy current sensor with a measuring transducer connected via cable
Dispositif de détermination de la distance entre deux composants, comprenant un récepteur de courant de Foucault ayant un convertisseur de mesure raccordé par liaison par câble

(30) Priorität: 21.05.2014 DE 202014004244 U
(43) Veröffentlichungstag der Anmeldung: 25.11.2015
(73) Patentinhaber: Reuter Messtechnik GmbH, 37290 Meißner (DE)
(72) Erfinder:
(74) Vertreter: Patentanwälte Walther Hinz Bayer PartGmbB

(56) Entgegenhaltungen:
- EP-A2- 2 053 346
- DE-A1-102008 005 180
- DE-T2- 69 708 773
- US-A- 3 609 527
- US-A- 3 688 187
- US-A- 4 604 251
- US-A1- 2014 091 786

## Beschreibung

Die vorliegende Erfindung betrifft eine Einrichtung zur Bestimmung des Abstandes zweier Bauteile zueinander, umfassend einen Wirbelstromaufnehmer mit einem durch eine Kabelverbindung daran angeschlossenen Messumformer.

Eine Einrichtung der eingangs genannten Art zur Bestimmung des Abstandes zweier Bauteile zueinander ist aus dem Stand der Technik bekannt. Der Messumformer bildet hierbei zusammen mit dem Wirbelstromaufnehmer nach dem Wirbelstrommessverfahren eine Oszillatorschaltung, deren Schwingungsamplitude durch die Annäherung eines elektrisch leitenden Messobjektes an die Stirnfläche des Wirbelstromaufnehmers gedämpft wird. Die Dämpfung ist hierbei proportional abhängig vom Abstand zwischen der Spule des Messstromaufnehmers und dem Messobjekt. In dem angeschlossenen Messumformer wird die Dämpfungsänderung in eine Spannungsänderung zur weiteren Signalverarbeitung umgesetzt.

Das Dokument EP 2053346 A2 offenbart beispielsweise eine Wirbelstromsensoranordnung zur Abstandsmessung an rotierenden Bauelementen, insbesondere Turbinenwellen, umfassend mindestens zwei Einzelsensoren, wobei die Einzelsensoren in unmittelbarer Nähe zueinander angeordnet sind und zwischen den Einzelsensoren jeweils eine Abschirmung aus einem elektrisch leitfähigen Material angebracht ist. Durch diese Abschirmung wird eine räumlich kompakte Kombination mehrerer Einzelsensoren bei gleichzeitiger geringstmöglicher gegenseitiger Beeinflussung erzielt.

Wesentlich für das weitere Verständnis der Erfindung ist, dass durch die Veränderung des Abstandes zwischen dem Wirbelstromaufnehmer und dem Bauteil, dem Oszillatorkreis auch Schwingkreis genannt, Energie entzogen wird, wobei dieser Energieentzug proportional zum Abstand zwischen dem Wirbelstromaufnehmer und dem Messgerät ist. Der Energieentzug bildet sich in einer Spannungsänderung ab, dass heißt, die jeweilige Spannung ist proportional zum Abstand des Wirbelstromaufnehmers zu dem Bauteil. Insofern besteht im Idealfall eine lineare Kennlinie zwischen Abstand und Spannungsausgang.

Nun ist es so, dass der Sensor oder Wirbelstromaufnehmer eine maximale Temperatur vom maximal 230° C ertragen kann, der Messumformer maximale Temperaturen von ca. 70° C. Eingesetzt werden derartige Einrichtungen zur Bestimmung des Abstandes zweier Bauteile zueinander, insbesondere zwischen rotierenden aber auch zwischen feststehenden Teilen, beispielsweise um den Rundlauf einer Turbine zu bestimmen, also an Stellen bzw. Orten, die gegebenenfalls extrem heiß werden, und insofern immer die Gefahr des Ausfalls des Wirbelstromaufnehmers besteht, wenn die Maximaltemperatur überschritten wird. Eingesetzt werden derartige Einrichtungen zur Bestimmung des Abstandes zweier Bauteile aber auch zur Bestimmung von Exzentrizitäten, bei der Deformierung und Durchbiegung von Maschinenteilen, bei axialen und radialen Wellenverlagerungen, zur Feststellung von Verschleiß und der Positionsmessung an Druckanlagen, bei Differenzausdehnungen zweier Bauteile, bei Gehäuseausdehnung, sowie auch zur Bestimmung der Ventilstellung der Ventile beispielsweise in einem Motor. Das heißt, der Einsatz derartiger Wirbelstromaufnehmer als Teil einer Einrichtung zur Bestimmung des Abstandes zweier Bauteile findet durchaus in einer Umgebung statt, die auch höhere Temperaturen als die Maximaltemperatur von 230° erwarten lässt. Insofern kommt es auch zu Ausfällen, was den Austausch des Wirbelstromaufnehmers, häufig auch als Wirbelstromabstandssensor bezeichnet, erforderlich macht.

In der Vergangenheit ist man dabei so vorgegangen, dass der Wirbelstromaufnehmer ausgetauscht wurde, indem ein neuer Wirbelstromaufnehmer an das Kabel, das den Wirbelstromaufnehmer mit dem Messumformer verbindet, angesetzt wurde. Es wurde bereits darauf hingewiesen, dass es absolut notwendig ist, dass die Linearität zwischen dem Abstand und der entsprechenden Spannung abgeglichen wird, damit die erforderliche Messgenauigkeit bereitgestellt werden kann. Zum Abgleich der Linearität zwischen Messumformer und Wirbelstromaufnehmer sind Spezialkenntnisse und entsprechende Apparaturen erforderlich. Ein Austausch vor Ort verbietet sich insofern in den meisten Fällen.

Um nun dennoch einen Austausch vor Ort schnell vornehmen zu können, dass heißt, Anlagen im Prinzip ohne Unterbrechung weiterlaufen lassen zu können, ist erfindungsgemäß eine Einrichtung gemäß des Anspruchs 1 vorgesehen, wobei der Messumformer in einem ersten Steckerteil einer zweiteiligen Steckerverbindung angeordnet ist und wobei der zweite Steckerteil mit einer Auswerteelektronik in Verbindung steht. Das heißt, dem Kunden wird eine Einheit aus Wirbelstromaufnehmer mit daran angeschlossenen Messumformer zum Austausch bereitgestellt, wobei der Messumformer oder Konverter oder Messumformer Bestandteil eines ersten Steckerteils ist, das in den korrespondierenden zweiten Steckerteil eingesteckt wird, der mit der Auswerteelektronik in Verbindung steht, um eine Abstandsmessung zwischen zwei Bauteilen sicher und genau durchführen zu können. Da der Wirbelstromaufnehmer oder Wirbelstromabstandssensor in Bezug auf die Linearität der Kennlinie mit dem daran angeschlossenen Messumformer abgeglichen ist, kann auch unqualifiziertes Personal einen derartigen Austausch vornehmen. Vorteilhaft an der gefundenen Konstruktionsausgestaltung ist weiterhin, dass der Stecker, also insbesondere das erste Steckerteil durch die frei wählbare Länge des Kabels einen entsprechend frei wählbaren Abstand zu dem Wirbelstrommessaufnehmer haben kann, sodass der in dem ersten Steckerteil angeordnete Messumformer nicht den hohen Temperaturen des Messaufnehmers ausgesetzt ist.

Weitere Merkmale und Ausgestaltungen der Erfindung ergeben sich aus den Unteransprüchen.

So ist insbesondere vorgesehen, dass das Kabel, das den Wirbelstrommessaufnehmer mit dem Messumformer verbindet, eine Drehkupplung aufweist. Eine solche Drehkupplung hat die Aufgabe zu verhindern, dass sich das Kabel verdrillt. Das heißt, dass sich die beiden Kabelteile, die die Kabelverbindung zwischen Messumformer und Wirbelstromaufnehmer bilden, beliebig zueinander verdrehen können, ohne dass es, wie bereits ausgeführt, zu einer Verdrillung des Kabels kommt.

Da die erfindungsgemäße Einrichtung durchaus in einem robusten Umfeld eingesetzt wird, ist vorteilhaft das Kabel der Kabelverbindung in einem Kabelschutzschlauch geführt.

Weiterhin hat es sich als erfindungsgemäß vorteilhaft herausgestellt, wenn die zweiteilige Steckerverbindung einen Anschluss z. B. in Form einer Steckerverbindung zur Einstellung der Parameter des Wirbelstromaufnehmers aufweist. Das heißt, dass hiermit auch vor Ort eine Überprüfung der Einrichtung zur Bestimmung des Abstandes zweier Bauteile möglich ist, und auch gegebenenfalls Änderungen bei Vorhandensein entsprechender Eingabeeinrichtungen möglich sind.

Anhand der Zeichnungen wird die Erfindung beispielhaft näher erläutert.
- Fig. 1: zeigt hierbei die erfindungsgemäße Einrichtung;

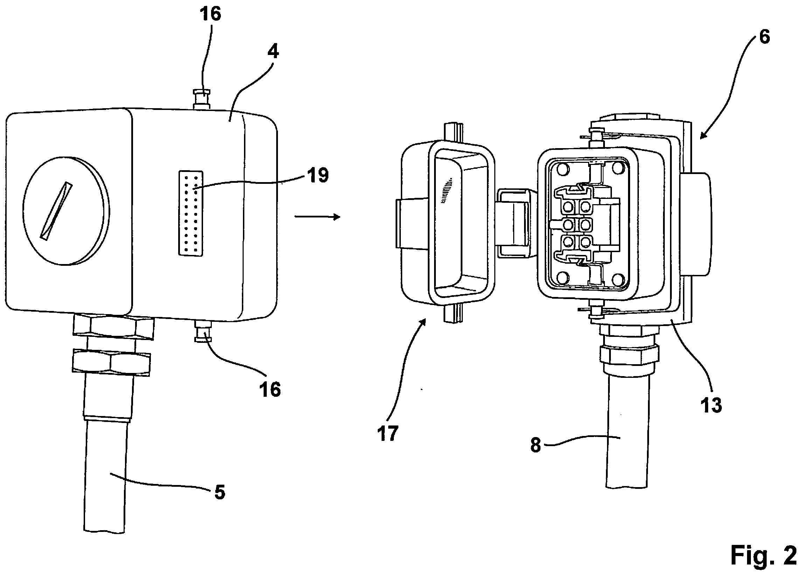

- Fig. 2: zeigt das erste und das zweite Steckerteil der zweiteiligen Steckerverbindung.

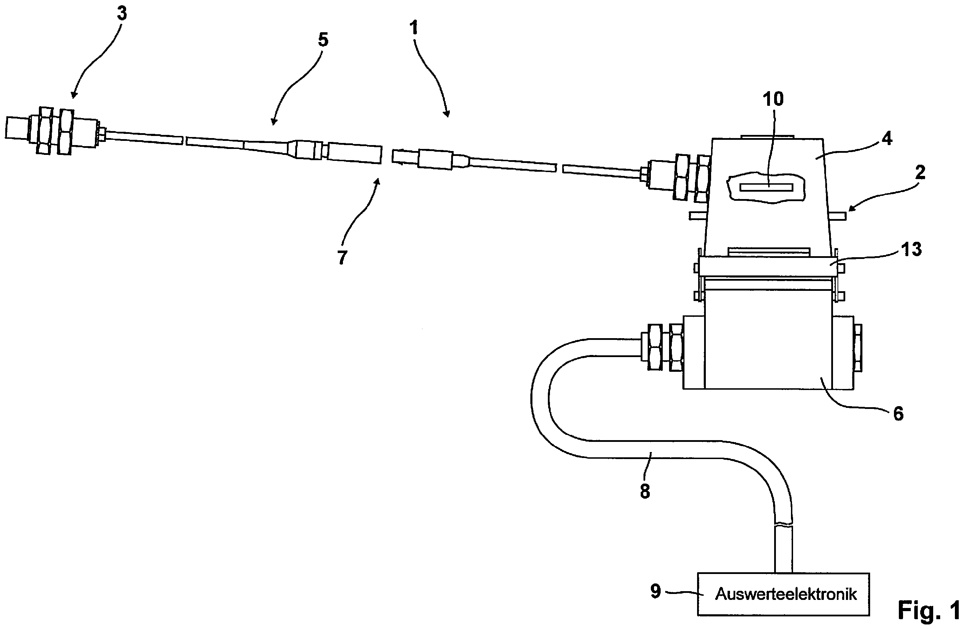

Die Einrichtung zur Bestimmung des Abstands zweier Bauteile ist gemäß Fig. 1 mit 1 bezeichnet. Die Einrichtung 1 umfasst den mit 3 bezeichneten Wirbelstromaufnehmer sowie den ersten Steckerteil 4 und den zweiten Steckerteil 6 der zweiteiligen Steckerverbindung 2, wobei der zweite Steckerteil durch eine Kabelverbindung 8 mit der Auswerteelektronik 9 in Verbindung steht. Die Verbindung zwischen dem Wirbelstromaufnehmer 3 und dem ersten Steckerteil 4 erfolgt über die insgesamt mit 5 bezeichnete Kabelverbindung, die die Drehkupplung 7 aufweist. Im ersten Steckerteil 4 integriert ist der Messumformer 10, der insbesondere als Platine ausgebildet ist. Der zweite Steckerteil 6 ist mit dem ersten Steckerteil durch eine schwenkbare Klammer 13 verbunden, die dafür sorgt, dass die beiden Steckerteile nicht unbeabsichtigt außer Eingriff gelangen können. Die am zweiten Steckerteil 6 angeordnete schwenkbare Klammer 13 wird hierbei in Eingriff mit den Achsstummeln 16 des ersten Steckerteils 4 gebracht. Der Deckel des zweiten Steckerteils 6 ist mit 17 bezeichnet.

Darüber hinaus ist im ersten Steckerteil 4 ein Steckeranschluss 19 vorgesehen, um gegebenenfalls Parameter des Wirbelstromaufnehmers verändern zu können.

### Bezugszeichenliste:

- 1: Einrichtung
- 2: Steckerverbindung
- 3: Wirbelstromaufnehmer
- 4: erstes Steckerteil
- 5: Kabelverbindung
- 6: zweites Steckerteil
- 7: Drehkupplung
- 8: Kabelverbindung
- 9: Auswerteelektronik
- 10: Messumformer
- 13: Klammer
- 16: Achsstummel
- 17: Deckel des zweiten Steckerteils
- 19: Steckeranschluss

## Patentansprüche

1. Einrichtung (1) zur Bestimmung des Abstandes zweier Bauteile zueinander, umfassend einen Wirbelstromaufnehmer (3) mit einem durch eine Kabelverbindung (5) daran angeschlossenen Messumformer (10), ein erstes und ein zweites Steckerteil einer zweiteiligen Steckerverbindung, und wobei die Einrichtung eine Auswerteelektronik (9) aufweist,
wobei der Messumformer (10) in dem ersten Steckerteil (4) der zweiteiligen Steckerverbindung integriert ist, wobei das erste Steckerteil (4) durch die Kabelverbindung (5) mit dem Wirbelstromaufnehmer (3) in Verbindung steht, wobei der zweite Steckerteil (6) mit einer Auswerteelektronik (9) in Verbindung steht, wobei das erste Steckerteil (4) in den korrespondierenden zweiten Steckerteil (6) einsteckbar ist,
wobei die zweiteilige Steckerverbindung einen Steckeranschluss (19) zur Einstellung der Parameter der Wirbelstromaufnehmer (3) aufweist

2. Einrichtung (1) zur Bestimmung des Abstandes zweier Bauteile zueinander nach Anspruch 1,
**dadurch gekennzeichnet,**
**dass** das Kabel (5) eine Drehkupplung (7) aufweist.

3. Einrichtung (1) zur Bestimmung des Abstandes zweier Bauteile zueinander nach Anspruch 1 oder 2,
**dadurch gekennzeichnet,**
**dass** das Kabel der Kabelverbindung (5) einen Kabelschutzschlauch aufweist.

## Claims

1. A device (1) for determining the distance between two components, including an eddy current sensor (3) with a measurement transmitter (10) connected to it by a cable connection (5), a first and second plug part of a two-part plug connection, and wherein the device comprises an electronic evaluation unit (9),
wherein the measurement transmitter (10) is integrated in the first plug part (4) of the two-part plug connection, wherein the first plug part (4) is connected with the eddy current sensor (3) by way of the cable connection (5), wherein the second plug part (6) is connected with an electronic evaluation unit (9), wherein the first plug part (4) can be plugged into the corresponding second plug part (6),
wherein the two-part plug connection comprises a plug connector (19) for adjusting the parameters of the eddy current sensor (3).

2. The device (1) for determining the distance between two components according to claim 1,
**characterized in that**
the cable (5) comprises a rotating coupling (7).

3. The device (1) for determining the distance between two components according to claim 1 or 2,
**characterized in that**
the cable of the cable connection (5) comprises a cable protection sleeve.

## Revendications

1. Dispositif (1) de détermination de la distance entre deux composants, comprenant un capteur de courant de Foucault (3) avec un transducteur de mesure (10) raccordé à celui-ci par une connexion filaire (5), une première et une seconde partie de connecteur d'un connecteur en deux parties, et où le dispositif comporte une électronique d'exploitation (9),
où le transducteur de mesure (10) est intégré dans la première partie de connecteur (4) du connecteur en deux parties, où la première partie de connecteur (4) est connectée au capteur de courant de Foucault (3) par l'intermédiaire de la connexion filaire (5), où la seconde partie de connecteur (6) est connectée à l'électronique d'exploitation (9), où la première partie de connecteur (4) peut être enfichée dans la seconde partie de connecteur (6) correspondante,
où le connecteur en deux parties comporte une borne de connecteur (19) pour le réglage des paramètres du capteur de courant de Foucault (3).

2. Dispositif (1) de détermination de la distance entre deux composants selon la revendication 1,
**caractérisé en ce que**
le câble (5) comporte un accouplement rotatif (7).

3. Dispositif (1) de détermination de la distance entre deux composants selon la revendication 1 ou 2,
**caractérisé en ce que**
le câble de la connexion filaire (5) comporte une gaine de protection du câble.
